# EUROPÄISCHE PATENTSCHRIFT

(11) **EP 0 922 939 B1**
(45) Veröffentlichungstag und Bekanntmachung des Hinweises auf die Patenterteilung: **02.07.2003**
(21) Anmeldenummer: 98123222.6
(22) Anmeldetag: 07.12.1998
(51) Int. Cl.: G01F 11/00, G01F 11/04

(54) **Flaschendosierer**
Dispensing device for bottles
Dispositif de dosage pour bouteilles

(30) Priorität: 09.12.1997 DE 19754558
(43) Veröffentlichungstag der Anmeldung: 16.06.1999
(73) Patentinhaber: Hirschmann Laborgeräte GmbH & Co. KG, 74246 Eberstadt (DE)
(72) Erfinder: Bigus, Hans-Jürgen Dr. rer. nat., 72124 Pliezhausen (DE); Rieker, Hans, 74246 Eberstadt (DE)
(74) Vertreter: Lichti, Heiner, Dipl.-Ing.

(56) Entgegenhaltungen:
- DE-A- 19 615 661
- DE-U- 29 710 012
- GB-A- 386 410
- US-A- 5 141 137

## Beschreibung

Die Erfindung betrifft einen Flaschendosierer mit einem die zu dosierende Flüssigkeit enthaltenden Behälter, einem diesen verschließenden Dosierkopf mit einer Pumpe, einer diese mit dem Behälter verbindenden Saugleitung mit Saugventil, einer mit der Pumpe verbundenen Abgabeleitung mit Druckventil, einer zwischen Pumpe und Behälter angeordneten Rücklaufleitung und einem Schaltorgan für die verschiedenen Strömungswege.

Flaschendosierer dieser Art dienen zum Dosieren von Flüssigkeiten beliebiger Art mit unterschiedlichen, einstellbaren Volumina. Der Behälter ist in Flaschenform ausgebildet und weist einen Behälterhals auf, auf den der Dosierkopf mit der Pumpe über eine Schraub- oder Schliffverbindung aufgesetzt ist. Die Pumpe kann beliebigen Aufbau aufweisen. In der Regel handelt es sich um eine Verdrängerpumpe, z.B. eine Kolbenpumpe, die manuell oder elektrisch angetrieben ist. Das zu dosierende Volumen wird in diesem Fall über den Kolbenhub voreingestellt. Für den Betrieb wird das Schaltorgan zunächst so eingestellt, daß die Pumpe im Saughub durch Öffnen des Saugventils in der Saugleitung die Flüssigkeit aus dem Behälter ansaugt. Nach entsprechendem Umstellen des Schaltorgans wird das voreingestellte Volumen beim Druckhub der Pumpe unter Öffnen des Druckventils über die Abgabeleitung abgegeben. Um in der Pumpe verbleibende Restmengen in den Behälter zurückzuführen, wird in einer weiteren Stellung des Schaltorgans beim Druckhub der Pumpe die im Pumpenraum enthaltene Restflüssigkeit über die Rücklaufleitung wieder in den Behälter abgegeben.

Bekannte Ausführungen solcher Flaschendosierer (DE 38 00 667, DE 43 44 320) weisen als Schaltorgan relativ komplizierte Ventilwellen auf, die den Dosierkopf durchsetzen und an ihrem einen außenliegenden Ende ein Betätigungsorgan aufweisen. In der Ventilwelle sind in relativ verwickelter Anordnung Kanäle eingebracht, die mit weiteren Kanälen im Dosierkopf die notwendigen drei Strömungswege (Ansaugen, Abgeben und Rückführen) bilden. Daneben sind dann innerhalb der die Saugleitung und die Abgabeleitung bildenden Kanäle des Dosierkopfs das Saugventil bzw. das Druckventil angeordnet. Diese bekannten Ausführungen sind konstruktiv aufwendig, platzraubend und funktionsanfällig.

Bei einer anderen bekannten Bauweise (DE 0 542 241, EP 0 652 421) ist die Rücklaufleitung hinter dem Druckventil von der Abgabeleitung abgezweigt. Dies führt zu einer hahnartigen Konstruktion, die weitgehend außerhalb des eigentlichen Dosierkopfs liegt und deshalb einen hohen Platzbedarf aufweist. Auch hier ist der konstruktive Bauaufwand relativ groß.

Eine kompakte Bauweise ergibt sich demgegenüber bei einer weiteren bekannten Ausführung (DE 195 36 258), bei der die Saugleitung und ein Abschnitt der Abgabeleitung im wesentlichen achsparallel im Dosierkopf angeordnet sind. Beide Leitungen weisen innerhalb des Dosierkopfs das Saugventil und das Druckventil auf. Hinter dem Druckventil ist senkrecht die eigentliche Abgabekanüle in die Abgabeleitung eingeschoben, wobei der senkrechte Abschnitt der Abgabeleitung mit dem Druckventil zugleich die Rücklaufleitung bildet. Sie wird durch Ziehen der Abgabekanüle geöffnet, während bei eingeschobener Abgabekanüle diese über eine Bohrung mit dem innerhalb des Dosierkopfs angeordneten Abschnitt der Abgabeleitung in strömungstechnischer Verbindung steht. Bei einer anderen Ausführung (DE 196 15 661) ist der Dosierkopf zweiteilig ausgebildet und der eine Teil mit der Pumpe in dem anderen Teil um eine senkrechte Achse drehbar gelagert. In den einander anliegenden Stirnseiten beider Teile ist in der Drehachse je ein Abschnitt der Saugleitung mit dem Saugventil und in dem pumpenseitigen, drehbaren Teil ein weiterer Kanal mit dem Druckventil angeordnet, der je nach Drehlage des pumpenseitigen Teils mit der Abgabeleitung oder der Rücklaufleitung in Flucht gebracht werden kann. Diese Ausführung ist zwar konstruktiv einfach, jedoch ist die Abdichtung der alle in einer Ebene mündenden Kanäle gegeneinander aufwendig und funktionsanfällig.

Der Erfindung liegt die Aufgabe zugrunde, einen Flaschendosierer des eingangs genannten Aufbaus in konstruktiver, funktioneller und bedienungstechnischer Hinsicht zu vereinfachen.

Diese Aufgabe wird erfindungsgemäß dadurch gelöst, daß die Saugleitung, die Abgabeleitung und die Rücklaufleitung in einem Zentrum zusammengeführt sind, das in der Saugleitung zwischen dem Saugventil und der Pumpe liegt, und daß in dem Zentrum ein das Schaltorgan bildender Dreiwegehahn angeordnet ist.

Gegenüber den bekannten Flaschendosierern ergibt sich zunächst eine äußerst kompakte Bauweise, da sämtliche Strömungswege innerhalb des Dosierkopfs verlaufen und in dem Zentrum mit dem Schaltorgan zusammengeführt sind. Dabei lassen sich die die verschiedenen Strömungswege bildenden Leitungen in konstruktiv übersichtlicher und fertigungstechnisch einfache Form realisieren. Das Schaltorgan sitzt zentral am Dosierkopf. Seine Ausbildung als Dreiwegehahn ist in ergonomischer Hinsicht besonders günstig, da der Benutzer schon allein anhand der Schaltstellungen die Strömungswege "ablesen" kann. Die notwendigen Dichtflächen sind auf ein Minimum, nämlich auf die Führungsflächen des Dreiwegehahns reduziert. Dabei handelt es sich um zylindrische oder konische Flächen, die problemlos flüssigkeitsdicht zu verwirklichen sind. Ebenso problemlos läßt sich der Dosierkopf mit dem Dreiwegehahn reinigen und letzterer notwendigenfalls auswechseln.

Vorzugsweise sind die Saugleitung, die Abgabeleitung und die Rücklaufleitung unter rechten Winkeln im Zentrum zusammengeführt. Auch hierdurch ist eine fertigungstechnisch besonders einfache Lösung gegeben.

Die Rücklaufleitung kann entweder bis zum Boden des Behälters verlaufen und braucht dann durch kein gesondertes Ventil abgesichert zu sein. Stattdessen kann die Rücklaufleitung, wie an sich bekannt, ein Druckventil aufweisen und dann unmittelbar unterhalb des Dosierkopfs in den Behälter münden.

Eine besonders einfache Ausführung zeichnet sich dadurch aus, daß die Saugleitung, die Abgabeleitung und zumindest ein Abschnitt der Rücklaufleitung durch zwei sich im Zentrum mit dem Dreiwegehahn kreuzende Bohrungen in dem Dosierkopf gebildet sind.

Dabei können die Saugleitung und ein weiterer Abschnitt der Rücklaufleitung von im wesentlichen parallelen Bohrungen im Dosierkopf gebildet sein, so daß sich eine platzsparende Anordnung ergibt, die zu einer entsprechend raumgünstigen Dimensionierung des Dosierkopfs führt.

In weiterhin vorteilhafter Ausführung kann die Abgabeleitung und der eine Abschnitt der Rücklaufleitung von einer den Dosierkopf querenden Durchgangsbohrung gebildet sein, in deren eines Ende das Druckventil der Abgabeleitung und in deren anderes Ende das Druckventil der Rücklaufleitung eingesetzt ist. Im Dosierkopf sind also lediglich zwei Durchgangsbohrungen für die Saugleitung einerseits und die Druckleitung sowie den einen Abschnitt der Rücklaufleitung andererseits vorzusehen, die sich fertigungstechnisch besonders einfach verwirklichen lassen. Der weitere Abschnitt der Rücklaufleitung wird dann als Stichbohrung parallel oder im wesentlichen parallel zur Saugleitung geführt. Der Dosierkopf läßt sich auf diese Weise auch problemlos als Spritzgußteil herstellen.

Eine weiterhin in fertigungstechnischer Hinsicht einfache Ausführung ergibt sich dann, wenn das Saugventil an der dem Behälter zugekehrten Unterseite des Dosierkopfs angesetzt ist. In gleicher Weise kann auch das Druckventil in der Rücklaufleitung angeordnet sein, so daß sich auch die Ventile leicht reinigen, ausbauen und gegebenenfalls austauschen lassen.

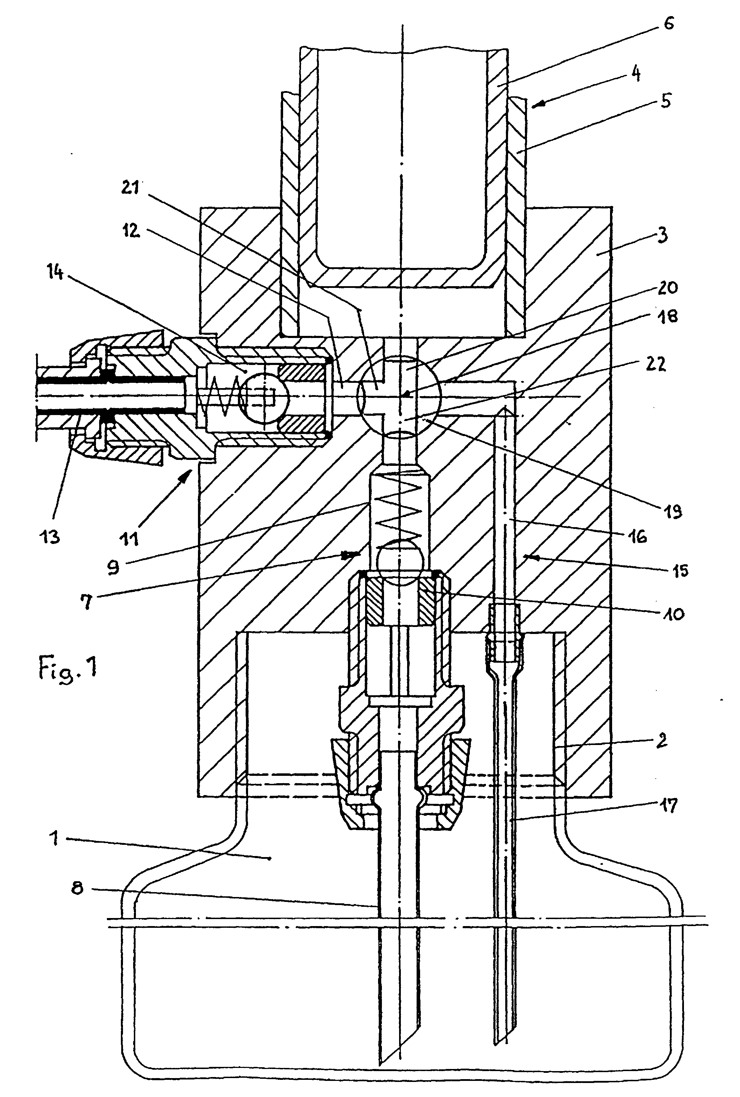

Nachstehend ist die Erfindung anhand mehrerer in der Zeichnung dargestellter Ausführungsformen beschrieben. In den Figuren 1 bis 3 ist je eine Ausführungsform im Axialschnitt gezeigt.

Der Flaschendosierer weist einen nur ausschnittsweise wiedergegebenen Behälter 1 auf, der die zu dosierende Flüssigkeit aufnimmt. Auf den Hals 2 des Behälters ist ein Dosierkopf 3 aufgeschraubt, der an seiner Oberseite eine Pumpe 4 in Form einer Verdrängerpumpe aufnimmt, die also beispielsweise aus einem Pumpenzylinder 5 und einem Kolben 6 besteht. Dem Pumpenkolben 6 ist eine nicht gezeigte Markierung an der Außenseite des Zylinders zugeordnet, mit deren Hilfe die Dosiermenge abgelesen, gegebenenfalls mit entsprechenden Hilfsmitteln auch voreingestellt werden kann.

Die Pumpe 4 ist mit dem Behälter 1 über eine insgesamt mit 7 bezeichnete Saugleitung verbunden, die aus einem bis auf den Boden des Behälters reichenden Saugschlauch 8 und einer in dem Dosierkopf 3 angeordneten Kanal 9 besteht. An der Unterseite des Dosierkopfs 3 ist in die Saugleitung 7 ein Saugventil 10 eingesetzt, das beispielsweise von einer federbelasteten Kugel mit einem Kugelsitz gebildet ist.

Ferner weist der Dosierkopf eine insgesamt mit 11 bezeichnete Abgabeleitung auf, die aus einem im Dosierkopf 3 ausgebildeten Kanal 12 und einer Dosierkanüle 13 besteht, zwischen denen ein Druckventil 14 angeordnet ist, das von einer Seite her in den Dosierkopf 3 eingesetzt ist. Auch das Druckventil weist eine federbelastete Kugel und einen entsprechenden Kugelsitz auf.

Schließlich ist im Dosierkopf 3 eine parallel zur Saugleitung 7 verlaufende Rückführleitung 15 angeordnet, die wiederum aus einem Kanal 16 innerhalb des Dosierkopfs und -beim gezeigten Ausführungsbeispiel- aus einem an diese anschließenden Schlauch 17 gebildet ist, der bis zum Boden des Behälters 1 reicht. Die Saugleitung 7, die Druckleitung 11 und die Rückführleitung 15 sind in einem Zentrum 18 zusammengeführt, das in der Saugleitung 7 innerhalb des Dosierkopfs 3 liegt. In das Zentrum 18 ist das Küken eines Dreiwegehahns 19 mit den Wegen 20, 21, 22 eingesetzt. In Fig. 1 befindet sich der Dreiwegehahn 19 in der Betriebsstellung. In dieser Stellung wird bei Aufwärtsbewegung des Kolbens 6 Flüssigkeit aus dem Behälter 1 über die Saugleitung 7, die Wege 22 und 20 des Dreiwegehahns in den Zylinder 4 angesaugt. Dabei öffnet das Saugventil 10, während sich das Druckventil 14 in Schließstellung befindet. Beim anschließenden Druckhub schließt das Saugventil 7 und wird die Flüssigkeit in der gewünschten Menge über die Wege 20, 21 bei geöffnetem Druckventil 14 und geschlossenem Saugventil 10 in die Abgabekanüle 13 der Abgabeleitung 11 ausgestoßen. Soll die Restflüssigkeit aus der Pumpe 4 in den Behälter 1 zurückgeführt werden, wird der Dreiwegehahn 19 um 180° gedreht, so daß beim Druckhub der Pumpe 4 die Flüssigkeit über die Wege 22, 21 und die Rücklaufleitung 16 in den Behälter zurücklaufen kann. Das Ansaugen kann bei einer um 180° gedrehten Stellung des Dreiwegehahns erfolgen. Zu diesem Zweck ist der Querschnitt der Rücklaufleitung 15 wesentlich kleiner als der der Saugleitung 7, deren gesamter Strömungswiderstand (einschließlich der Federkraft des Saugventils kleiner ist als der der Rücklaufleitung). In dieser Position des Dreiwegehahns wird bei einem Wechsel des Behälters 1 auch das System durch die Rücklaufleitung 15 entlüftet.

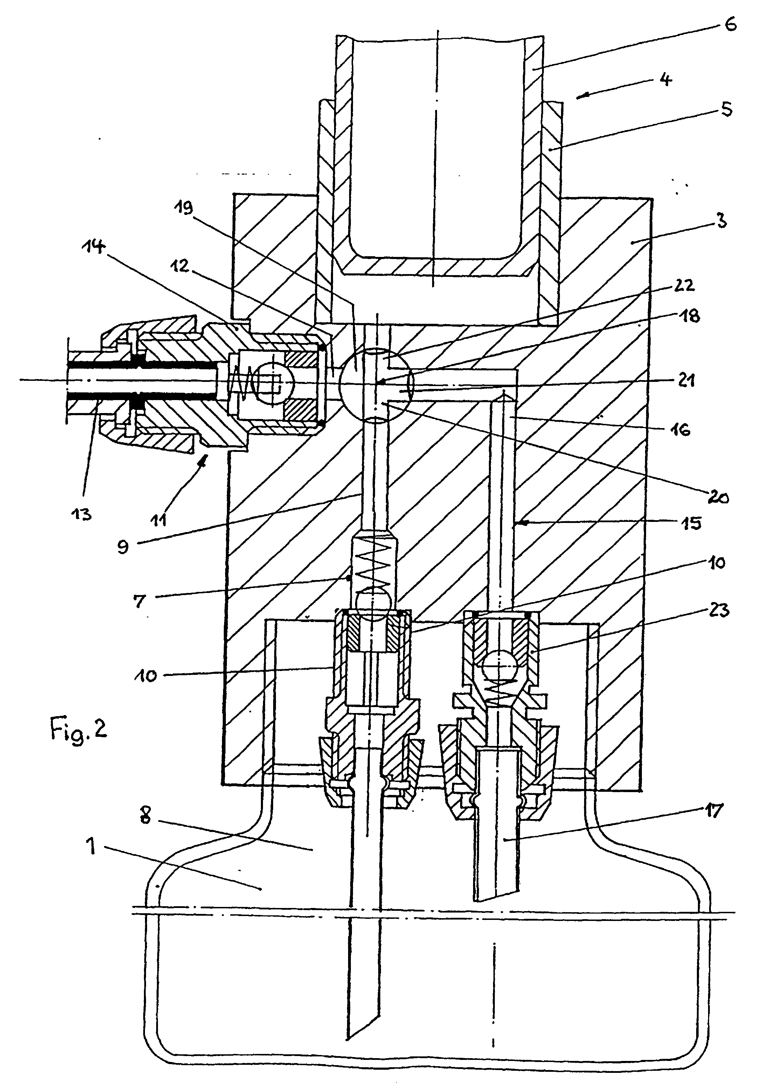

Die Ausführungsform gemäß Fig. 2 unterscheidet sich von der gemäß Fig. 1 dadurch, daß in die Rücklaufleitung 15 gleichfalls ein Druckventil 23 eingesetzt ist. Sowohl das Druckventil 23 in der Rücklaufleitung 15, als auch das Saugventil 10 in der Saugleitung 7 sind von unten her an den Dosierkopf 3 angesetzt. Der Dreiwegehahn 19 ist in der Rückführstellung gezeigt.

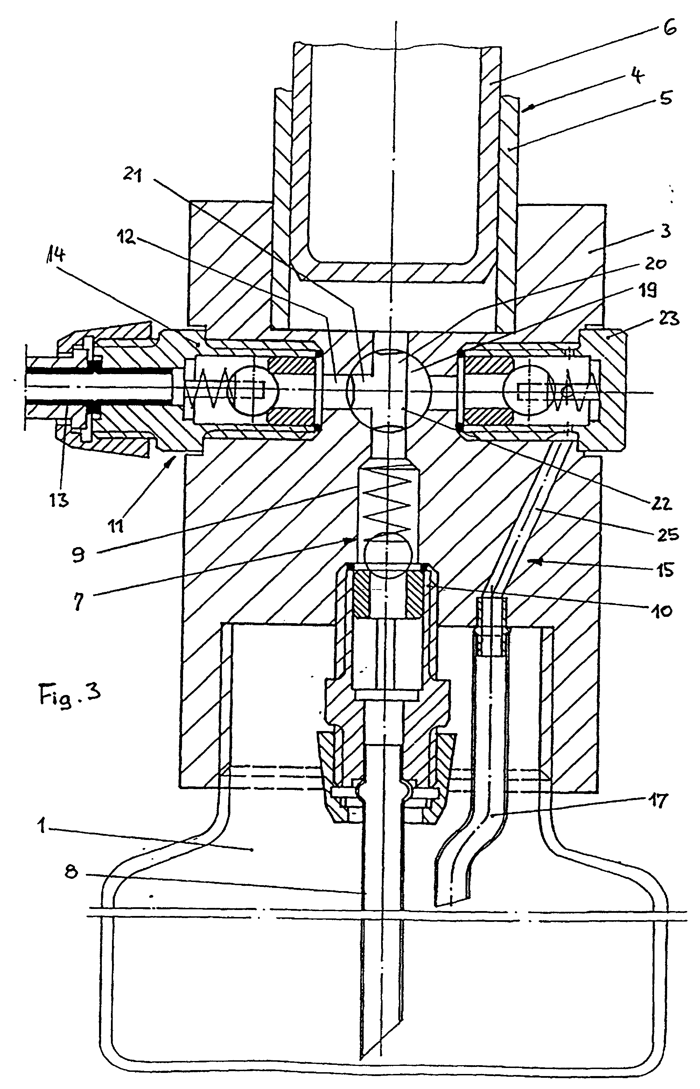

Bei dem Ausführungsbeispiel gemäß Fig. 3 sind die innerhalb des Dosierkopfs liegenden Abschnitte 12 und 24 der Abgabeleitung bzw. der Rückführleitung 15 durch eine den Dosierkopf 3 querende Durchgangsbohrung gebildet, die an ihrer einen Seite durch das Druckventil 14 der Abgabeleitung 11 an der anderen Seite durch das Druckventil 23 der Rücklaufleitung verschlossen ist. In diesem Fall ist der weitere Abschnitt 25 der Rücklaufleitung 15 schräg innerhalb des Dosierkopfs 3 angeordnet.

Wie aus der Zeichnung ohne weiteres ersichtlich, lassen sich bei dem Ausführungsbeispiel gemäß Fig. 3 die notwendigen Strömungswege fertigungstechnisch einfach herstellen und der gesamte Dosierkopf mit den verschiedenen Ventilen problemlos montieren.

## Patentansprüche

1. Flaschendosierer mit einem die zu dosierende Flüssigkeit enthaltenden Behälter (1), einem diesen verschließenden Dosierkopf (3) mit einer Pumpe (4), einer diese mit dem Behälter verbindenden Saugleitung (7) mit Saugventil (10), einer mit der Pumpe (4) verbundenen Abgabeleitung (11) mit Druckventil (14), einer zwischen Pumpe (4) und Behälter (1) angeordneten Rücklaufleitung (15) und einem Schaltorgan für die verschiedenen Strömungswege, **dadurch gekennzeichnet, daß** die Saugleitung (7), die Abgabeleitung (11) und die Rücklaufleitung (15) in einem Zentrum (18) zusammengeführt sind, das in der Saugleitung zwischen dem Saugventil (10) und der Pumpe (4) liegt, und daß in dem Zentrum ein das Schaltorgan bildender Dreiwegehahn (9) angeordnet ist.

2. Flaschendosierer nach Anspruch 1, **dadurch gekennzeichnet, daß** die Saugleitung (7) die Abgabeleitung (11) und die Rücklaufleitung (15) unter rechten Winkeln im Zentrum (18) zusammengeführt sind.

3. Flaschendosierer nach Anspruch 1 oder 2, **dadurch gekennzeichnet, daß** die Rücklaufleitung (15) bis zum Boden des Behälters verläuft.

4. Flaschendosierer nach einem der Ansprüche 1 bis 3, **dadurch gekennzeichnet daß** die Rücklaufleitung (15) ein Druckventil (23) aufweist und unterhalb des Dosierkopfs (3) in den Behälter (1) mündet.

5. Flaschendosierer nach einem der Ansprüche 1 bis 4, **dadurch gekennzeichnet, daß** die Saugleitung (7), die Abgabeleitung (11) und zumindest ein Abschnitt der Rücklaufleitung (15) durch zwei sich im Zentrum (18) mit dem Dreiwegehahn (19) kreuzende Bohrungen in dem Dosierkopf (3) gebildet sind.

6. Flaschendosierer nach einem der Ansprüche 1 bis 5, **dadurch gekennzeichnet, daß** die Saugleitung (7) und ein weiterer Abschnitt (16) der Rücklaufleitung (15) von im wesentlichen parallelen Bohrungen im Dosierkopf gebildet sind.

7. Flaschendosierer nach einem der Ansprüche 1 bis 6, **dadurch gekennzeichnet, daß** die Abgabeleitung (11) und der eine Abschnitt der Rücklaufleitung (15) von einer den Dosierkopf (3) querenden Durchgangsbohrung gebildet sind, in deren eines Ende das Druckventil (14) der Abgabeleitung (11) und in deren anderes Ende das Druckventil (23) der Rücklaufleitung (15) eingesetzt ist.

8. Flaschendosierer nach einem der Ansprüche 1 bis 7, **dadurch gekennzeichnet, daß** das Saugventil (10) an der dem Behälter (1) zugekehrten Unterseite des Dosierkopfs (3) angesetzt ist.

9. Flaschendosierer nach einem der Ansprüche 1 bis 6, **dadurch gekennzeichnet, daß** das Druckventil (23) in der Rücklaufleitung (15) an der dem Behälter (1) zugekehrten Unterseite des Dosierkopfs (3) angesetzt ist.

## Claims

1. Dosing device for bottles with a container (1) containing the liquid to be dosed, a dosing head (3) closing said container and provided with a pump (4), a suction line (7) connecting the latter to the container and provided with a suction valve (10), a delivery line (11), connected to the pump (4) and provided with a delivery valve (14), a return line (15) positioned between the pump (4) and the container (1) and a switching member for the different flow paths, **characterized in that** the suction line (7), delivery line (11) and return line (15) are brought together in a centre (18), which is located in the suction line between the suction valve (10) and the pump (4) and that in the centre is located a three-way cock (19) forming the switching member.

2. Dosing device for bottles according to claim 1, **characterized in that** the suction line (7), delivery line (11) and return line (15) are brought together under right angles in the centre (18).

3. Dosing device for bottles according to claim 1 or 2, **characterized in that** the return line (15) extends to the container bottom.

4. Dosing device for bottles according to one of the claims 1 to 3, **characterized in that** the return line (15) has a delivery valve (23) and issues into the container (1) below the dosing head (3).

5. Dosing device for bottles according to one of the claims 1 to 4, **characterized in that** the suction line (7), delivery line (11) and at least a portion of the return line (15) are formed by two holes in the dosing head (3) crossing in the centre (18) with the three-way cock (19).

6. Dosing device for bottles according to one of the claims 1 to 5, **characterized in that** the suction line (7) and a further portion (16) of the return line (15) are formed by substantially parallel holes in the dosing head.

7. Dosing device for bottles according to one of the claims 1 to 6, **characterized in that** the delivery line (11) and one portion of the return line (15) are formed by a through-hole traversing the dosing head (3) and in whose one end is inserted the delivery valve (14) of the delivery line (11) and in whose other end is inserted the delivery valve (23) of the return line (15).

8. Dosing device for bottles according to one of the claims 1 to 7, **characterized in that** the suction valve (10) is fixed to the underside of the dosing head facing the container (1).

9. Dosing device for bottles according to one of the claims 1 to 6, **characterized in that** the delivery valve (23) is fixed in the return line (15) to the underside of the dosing head (3) facing the container (1).

## Revendications

1. Dispositif de dosage pour bouteilles comportant un récipient (1) contenant le liquide à doser, une tête de dosage (3) fermant ce récipient comprenant une pompe (4), un conduit d'aspiration (7) reliant celle-ci au récipient présentant un clapet d'aspiration (10), un conduit de refoulement (11) relié à la pompe (4) présentant un clapet de refoulement (14), un conduit de décharge (15) disposé entre la pompe (4) et le récipient (1) et un organe dé commutation pour les différentes voies de flux, **caractérisé en ce que** le conduit d'aspiration (7), le conduit de refoulement (11) et le conduit de décharge (15) sont réunis dans un centre (18) situé dans le conduit d'aspiration entre le clapet d'aspiration (10) et la pompe (4), et **en ce qu'**une vanne à trois voies (9) constituant l'organe de commutation est disposée dans le centre.

2. Dispositif de dosage pour bouteilles selon la revendication 1, **caractérisé en ce que** le conduit d'aspiration (7), le conduit de refoulement et le conduit de décharge (15) sont réunis à angles droits dans le centre (18).

3. Dispositif de dosage pour bouteilles selon la revendication 1 ou 2, **caractérisé en ce que** le conduit de décharge (15) s'étend jusqu'au fond du récipient.

4. Dispositif de dosage pour bouteilles selon l'une quelconque des revendications 1 à 3, **caractérisé en ce que** le conduit de décharge (15) présente un clapet de décharge (23) et débouche dans le récipient (1) en-dessous de la tête de dosage (3).

5. Dispositif de dosage pour bouteilles selon l'une quelconque des revendications 1 à 4, **caractérisé en ce que** le conduit d'aspiration (7), le conduit de refoulement (11) et au moins une partie du conduit de décharge (15) sont constitués par deux perçages dans la tête de dosage (3) se croisant dans le centre (18) avec la vanne à trois voies (19).

6. Dispositif de dosage pour bouteilles selon l'une quelconque des revendications 1 à 5, **caractérisé en ce que** le conduit d'aspiration (7) et une autre partie (16) du conduit de décharge (15) sont constitués par deux perçages dans la tête de dosage sensiblement parallèles.

7. Dispositif de dosage pour bouteilles selon l'une quelconque des revendications 1 à 6, **caractérisé en ce que** le conduit de refoulement (11) et l'une des partie du conduit de décharge (15) sont constitués par un perçage traversant la tête de dosage (3), dans l'une des extrémités duquel est mis en place le clapet de refoulement (14) du conduit de refoulement (11) et dans l'autre extrémité duquel est mis en place le clapet de décharge (23) du conduit de décharge (15).

8. Dispositif de dosage pour bouteilles selon l'une quelconque des revendications 1 à 7, **caractérisé en ce que** le clapet d'aspiration (10) est fixé sur la face inférieure de la tête de dosage (3) en regard du récipient (1).

9. Dispositif de dosage pour bouteilles selon l'une quelconque des revendications 1 à 6, **caractérisé en ce que** le clapet de décharge (23) est fixé dans le conduit de décharge (15) sur la face inférieure de la tête de dosage (3) en regard du récipient (1).
